# EUROPEAN PATENT SPECIFICATION

(11) **EP 3 689 691 B1**
(45) Date of publication and mention of the grant of the patent: **05.10.2022**
(21) Application number: 20154572.0
(22) Date of filing: 30.01.2020
(51) Int. Cl.: B60T 8/32, B66F 9/075

(54) **BRAKE SYSTEM**
BREMSSYSTEM
SYSTÈME DE FREIN

(30) Priority: 31.01.2019 JP 2019015961
(43) Date of publication of application: 05.08.2020
(73) Proprietor: Kabushiki Kaisha Toyota Jidoshokki, Kariya-shi, Aichi 448-8671 (JP)
(72) Inventor: Matsuki, Takanori, Aichi, 448-8671 (JP)
(74) Representative: Hoffmann Eitle

(56) References cited:
- CN-A- 109 052 238
- DE-A1- 10 159 326
- GB-A- 1 600 703
- JP-A- H01 273 762
- US-A1- 2017 101 296
- US-B1- 6 179 389

## Description

### TECHNICAL FIELD

The present invention relates to a brake system.

### BACKGROUND

As a conventional brake system of a vehicle, for example, a technique described in Japanese Unexamined Patent Publication No. HI-273762 is known. The brake system described in Japanese Unexamined Patent Publication No. HI-273762 includes a braking unit which generates a braking force when a driver operates a brake pedal. This brake system further includes a dedicated brake pump and generates a braking force by a brake fluid pressure generated by the pump. Accordingly, the brake system can brake the vehicle by a method other than the operation of the brake pedal of the driver.

DE 101 59 326 A1 discloses a hydraulic unit as an adjusting unit for a vehicle steering system, with at least one hydraulic chamber which has at least one hydraulic piston and can be acted upon with the pressure of a hydraulic pressure source. The hydraulic unit can be connected to the hydraulic pressure source or a pressure medium reservoir via a valve unit.

### SUMMARY

However, the above-described brake system requires a dedicated brake pump as a brake means other than the operation of the brake pedal. When such a dedicated brake driving source is provided, an increase in cost occurs. Thus, a brake system capable of generating a braking force without using a dedicated driving source is required.

Thus, an object of the present invention is to provide a brake system capable of generating a braking force without using a dedicated driving source.

A brake system of an aspect of the present invention is a brake system for stopping an operation of a vehicle, the brake system including the features of claim 1.

The brake system includes the braking unit generating a braking force. This braking unit is, for example, an existing mechanism which generates a braking force by the operation of a driver. The brake system includes the transmission unit with respect to the braking unit. The transmission unit generates a braking force in the braking unit by transmitting the hydraulic pressure of the hydraulic circuit performing a predetermined operation by the hydraulic pressure to the braking unit. Accordingly, the braking unit can generate a braking force by using the hydraulic pressure of the existing hydraulic circuit. As described above, it is possible to generate a braking force without using a dedicated driving source.

The brake system further includes an operation unit which operates the braking unit and a master cylinder which generates a braking hydraulic pressure for the braking unit by the operation of the operation unit, in which the transmission unit transmits the braking hydraulic pressure to the braking unit through the master cylinder by operating the master cylinder by the hydraulic pressure. Accordingly, the transmission unit can transmit the braking hydraulic pressure to the braking unit through the master cylinder even when the braking oil used in the braking unit is different from the hydraulic oil used in the hydraulic circuit.

In the brake system, the transmission unit may transmit the hydraulic pressure to the braking unit by sending hydraulic oil of the hydraulic circuit to the braking unit. In this case, the transmission unit can transmit the hydraulic pressure to the braking unit without using a complex mechanism.

In the brake system, the transmission unit may transmit the hydraulic pressure of the hydraulic circuit of a steering system performing a steering operation of the vehicle to the braking unit. In this case, the transmission unit can generate a braking force in the braking unit by using the hydraulic pressure of the existing steering system of the vehicle.

In the brake system, the transmission unit may transmit the hydraulic pressure of the hydraulic circuit of a cargo handling system performing a cargo handling operation to the braking unit. In this case, the transmission unit can generate a braking force in the braking unit by using the hydraulic pressure of the existing cargo handling system of the vehicle.

According to the present invention, it is possible to provide a brake system capable of generating a braking force without using a dedicated driving source.

### BRIEF DESCRIPTION OF THE DRAWINGS

FIG. 1 is a schematic side view illustrating an example of a vehicle including a brake system according to an embodiment of the present invention.
FIG. 2 is a schematic plan view illustrating a rear portion side of the vehicle illustrated in FIG. 1.
FIG. 3 is a schematic configuration diagram of the brake system according to an embodiment of the present invention.
FIG. 4 is a schematic configuration diagram of a modified brake system (not according to the invention).
FIG. 5 is a schematic configuration diagram of a modified brake system according to the invention.
FIG. 6 is a schematic configuration diagram of a modified brake system (not according to the invention).

### DETAILED DESCRIPTION

Hereinafter, an embodiment of the present invention will be described in detail with reference to the drawings.

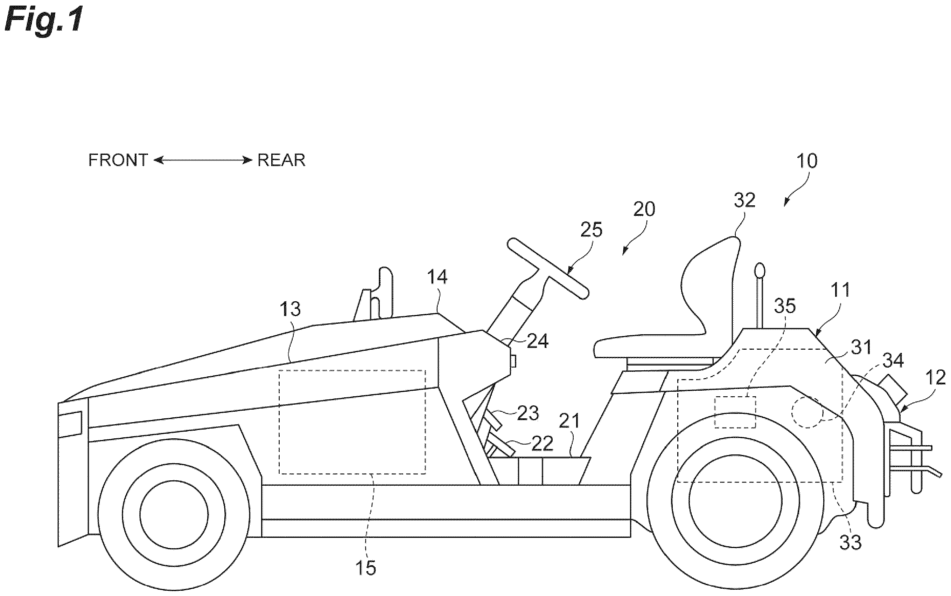

FIG. 1 is a schematic side view illustrating an example of a vehicle including a brake system according to the embodiment. As illustrated in FIG. 1, a towing tractor 10 which is a towing vehicle as a vehicle includes a vehicle body 11. The towing tractor 10 includes a connecting device (drawbar) 12 connected to a towing target at the rear portion of the vehicle body 11. The towing tractor 10 tows a towing target connected to the connecting device 12. The towing target is, for example, a cart or the like loaded with a load. Additionally, in the following description, front, rear, right, and left indicate front, rear, right, and left of the vehicle body 11.

The vehicle body 11 includes a driver seat 20. The vehicle body 11 includes a battery housing 13 in front of the driver seat 20. The battery housing 13 is covered with a battery hood 14 which can be opened and closed. The battery housing 13 accommodates a battery 15.

The vehicle body 11 includes a rear frame 31 which is also used as a weight behind the driver seat 20. The rear frame 31 is manufactured by, for example, casting. A seat 32 is disposed on an upper surface of the rear frame 31.

As illustrated in FIG. 1, the driver seat 20 includes a floor 21. The floor 21 is located between the battery housing 13 and the rear frame 31. The driver seat 20 is provided with an accelerator pedal 22 and a brake pedal 23. A rear surface of the battery housing 13 is provided with a dashboard 24.

The dashboard 24 is provided with a steering device 25 or an instrument displaying the status of the towing tractor 10, or the like. The rear frame 31 includes a housing portion 33. The housing portion 33 accommodates a traveling motor 34 allowing the towing tractor 10 to travel, a control device 35 controlling the traveling motor 34, or the like. The traveling motor 34 is driven by using the battery 15 as a power source. The towing tractor 10 of the embodiment is a battery type vehicle which travels by using the battery 15 as a power source.

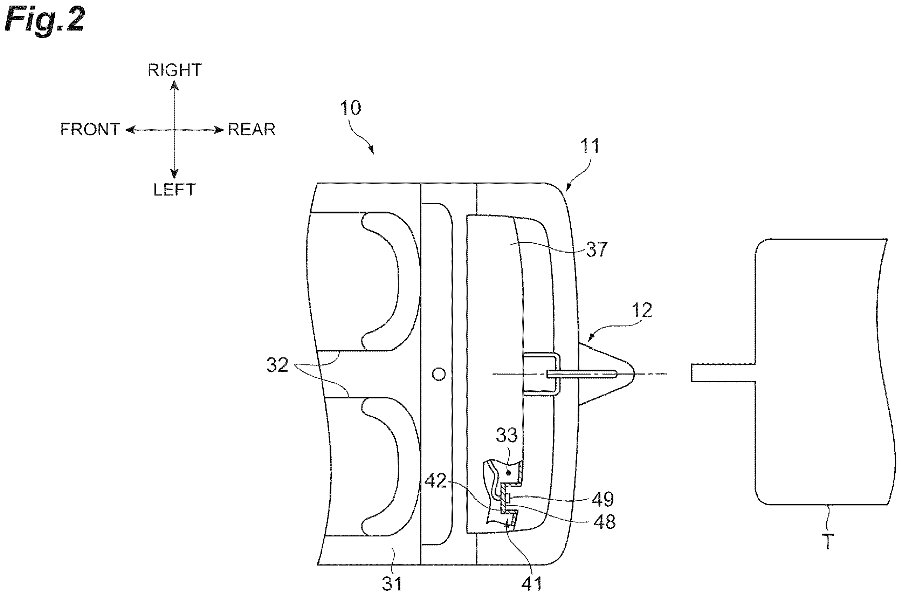

FIG. 2 is a schematic plan view illustrating a rear portion side of the towing tractor 10 illustrated in FIG. 1. As illustrated in FIG. 2, the vehicle body 11 includes an inching device 41 provided in a rear portion. The inching device 41 is attached to a panel 37. The inching device 41 includes a switch 49 and a casing 42. The casing 42 accommodates the switch 49. The inching device 41 is used when connecting the towing target T to the connecting device 12.

The switch 49 includes a forward switch, a reverse switch, and an emergency stop switch. Each switch 49 is a push type switch which is turned on or off in accordance with a pressing operation. Each switch 49 protrudes according to an attachment surface 48. Since the attachment surface 48 is shifted to the left from the center of the vehicle width direction, each switch 49 is also shifted to the left from the center of the vehicle width direction. Since the attachment surface 48 is exposed to the outside of the vehicle, each switch 49 protruding from the attachment surface 48 protrudes to the outside of the vehicle. Thus, a passenger can operate each switch 49 from the outside of the vehicle.

Each switch 49 is connected to the control device 35 inside the housing portion 33. When the forward switch or the reverse switch is operated while the power of the vehicle body 11 is turned on by a key switch, the control device 35 drives the traveling motor 34. When the forward switch is turned on, the control device 35 controls the traveling motor 34 so that the towing tractor 10 moves forward minutely. When the reverse switch is turned on, the control device 35 controls the traveling motor 34 so that the towing tractor 10 moves backward minutely. The towing tractor 10 moves forward and backward in response to the operation of the switch 49 and the brake thereof is operated when the forward switch or the reverse switch is released or after a predetermined time elapses. When the emergency stop switch is turned on, the control device 35 operates the brake or the like to brake the towing tractor 10.

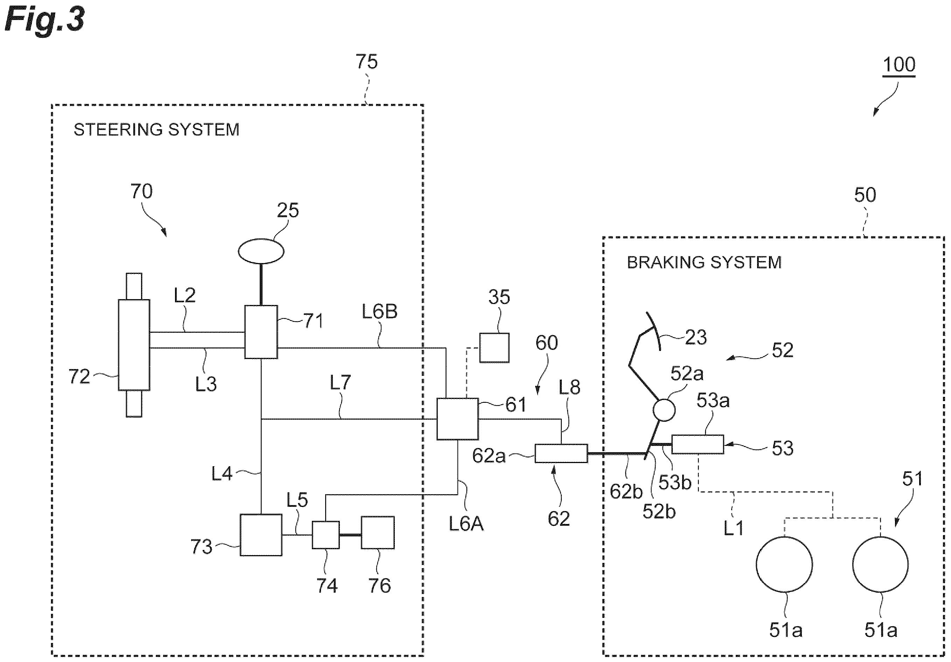

Next, a configuration of the brake system 100 according to the embodiment will be described with reference to FIG. 3. FIG. 3 is a schematic configuration diagram of the brake system 100 according to the embodiment.

The brake system 100 is a system which stops the operation of the towing tractor 10 which is a towing vehicle as a vehicle. The brake system 100 automatically generates a braking force at a necessary timing. Further, the brake system 100 generates a braking force for stopping the towing tractor 10 when the emergency stop switch is pushed. The brake system 100 includes a braking system 50, a transmission unit 60, and the control device 35.

The braking system 50 is a system for generating a braking force for stopping the operation of the towing tractor 10. The braking system 50 is an existing system provided in a conventional towing tractor. The braking system 50 includes a braking unit 51, an operation unit 52, and a master cylinder 53.

The braking unit 51 generates a braking force. Further, the braking unit 51 can switch a state in which the braking force is generated and a state in which the braking force is not generated. The braking unit 51 includes a brake pad 51a which sandwiches a brake disk (not illustrated) rotating along with the rotation of the vehicle wheel. The braking unit 51 switches the opening and closing of the brake pad 51a on the basis of the braking hydraulic pressure. The braking unit 51 sandwiches the brake disk by the brake pad 51a by closing the brake pad 51a when the braking hydraulic pressure is applied. Accordingly, the braking unit 51 stops the forward or backward movement of the towing tractor 10 by generating the braking force. When the braking hydraulic pressure is not applied, the braking unit 51 opens the brake pad 51a so as to release the braking force.

The operation unit 52 is a mechanism operating the braking unit 51. The operation unit 52 includes the brake pedal 23, a shaft portion 52a, and a swinging portion 52b. The shaft portion 52a is a member that is connected to a base portion of the brake pedal 23 and rotatably supports the brake pedal 23. The swinging portion 52b is rotatably supported by the shaft portion 52a. The swinging portion 52b swings in accordance with the rotation of the shaft portion 52a. The swinging portion 52b is connected to a push rod 53b of the master cylinder 53.

The master cylinder 53 transmits the braking hydraulic pressure to the braking unit 51 in accordance with the operation state of the operation unit 52. The master cylinder 53 includes a cylinder 53a and a push rod 53b. A front end of the push rod 53b of the master cylinder 53 is provided with a piston moving through the cylinder 53a in a reciprocating manner. The push rod 53b and the piston move in a reciprocating manner on the basis of the operation of the swinging portion 52b of the operation unit 52. The cylinder 53a sends braking oil to the braking unit 51 through a braking oil line L1 in response to the operation of the piston.

When the brake pedal 23 is depressed, the shaft portion 52a rotates toward one side in the rotation direction. Accordingly, the swinging portion 52b pushes the piston and the push rod 53b of the master cylinder 53 into the cylinder 53a. Accordingly, the master cylinder 53 sends the braking oil to the braking unit 51 through the braking oil line L1. Accordingly, since the braking hydraulic pressure is applied to the braking unit 51, the braking unit 51 generates a braking force. When the depression of the brake pedal 23 is released, the shaft portion 52a rotates toward the other side in the rotation direction. Accordingly, the push rod 53b of the master cylinder 53 is returned by the swinging portion 52b and the piston is returned in the cylinder 53a by a return spring. Accordingly, the braking oil is returned from the braking unit 51 through the braking oil line L1. Accordingly, the braking hydraulic pressure applied to the braking unit 51 is released and the braking unit 51 releases the braking force.

The transmission unit 60 generates a braking force in the braking unit 51 by transmitting a hydraulic pressure of a hydraulic circuit 70 performing a predetermined operation by the hydraulic pressure to the braking system 50. The transmission unit 60 transmits the hydraulic pressure of the hydraulic circuit 70 of a steering system 75 performing a steering operation of the towing tractor 10 to the braking unit 51. The transmission unit 60 transmits the braking hydraulic pressure to the braking unit 51 by operating the master cylinder 53 by the hydraulic pressure. The transmission unit 60 includes an electromagnetic switching valve 61 which is provided in the hydraulic circuit 70 and a hydraulic cylinder 62 which is connected to the braking system 50.

Here, the hydraulic circuit 70 of the steering system 75 will be described. The hydraulic circuit 70 switches the traveling direction of the towing tractor 10 on the basis of the steering operation of the driver. The hydraulic circuit 70 includes the steering device 25, a PS valve 71, a PS cylinder 72, a PS tank 73, a PS pump 74, and a motor 76. Further, the hydraulic circuit 70 includes hydraulic oil lines L2 to L7. The hydraulic oil lines L2 and L3 connect the PS valve 71 to the PS cylinder 72. The hydraulic oil line L4 connects the PS valve 71 to the PS tank 73. The hydraulic oil line L5 connects the PS tank 73 to the PS pump 74. Hydraulic oil lines L6A and L6B connect the PS pump 74 to the PS valve 71 through the electromagnetic switching valve 61. The hydraulic oil line L7 connects the hydraulic oil lines L6A and L6B to the hydraulic oil line L4.

The steering device 25 is a device for performing a steering operation by the driver. The steering device 25 includes a handle and inputs an operation direction and a steering amount to the PS valve 71 on the basis of the handle operation. The PS valve 71 is a valve which is opened and closed on the basis of the steering operation of the steering device 25. The PS valve 71 applies a hydraulic pressure in response to the steering direction and the steering amount of the steering operation to the PS cylinder 72 through the hydraulic oil lines L2 and L3. The PS cylinder 72 expands and contracts in response to the hydraulic pressure applied from the PS valve 71. Accordingly, the PS cylinder 72 adjusts the direction of the vehicle wheel of the towing tractor 10 on the basis of the steering operation. The PS valve 71 returns the hydraulic oil to the PS tank 73 through the hydraulic oil line L4. The PS pump 74 circulates the hydraulic oil in the hydraulic circuit 70 by using the motor 76 as a driving source. The PS pump 74 draws up the hydraulic oil from the PS tank 73 through the hydraulic oil line L5 and supplies the hydraulic oil to the PS valve 71 through the hydraulic oil lines L6A and L6B.

The electromagnetic switching valve 61 of the transmission unit 60 is provided between the PS pump 74 and the PS valve 71. That is, the electromagnetic switching valve 61 is provided between the hydraulic oil line L6A and the hydraulic oil line L6B. Further, the electromagnetic switching valve 61 is connected to the hydraulic oil line L7 returning the hydraulic oil of the hydraulic oil line L6A to the PS tank 73. Further, the electromagnetic switching valve 61 is connected to the hydraulic cylinder 62 through a hydraulic oil line L8. Accordingly, the electromagnetic switching valve 61 supplies the hydraulic oil from the PS pump 74 through the hydraulic oil line L6A. Further, the electromagnetic switching valve 61 switches the following two states. In one state, the electromagnetic switching valve 61 supplies the hydraulic oil supplied from the PS pump 74 from the hydraulic oil line L6A to the hydraulic oil line L6B and connects the hydraulic oil line L8 to the hydraulic oil line L7 so as to release the hydraulic pressure inside the hydraulic cylinder 62 to the PS tank 73. In the other state, the electromagnetic switching valve 61 supplies the hydraulic oil supplied from the PS pump 74 from the hydraulic oil line L6A to the hydraulic oil line L6B and supplies a part of the hydraulic pressure relating to the supply to the hydraulic oil line L8 so as to operate the hydraulic cylinder 62.

The hydraulic cylinder 62 pushes the swinging portion 52b of the operation unit 52 in a braking force generation direction by the hydraulic pressure generated by the supply of the hydraulic oil from the electromagnetic switching valve 61. The cylinder 62a of the hydraulic cylinder 62 is connected to the hydraulic oil line L8. Further, a piston rod 62b of the hydraulic cylinder 62 is connected to the swinging portion 52b of the operation unit 52. Accordingly, when hydraulic oil is supplied to the cylinder 62a, the piston moves inside the cylinder 62a and the piston rod 62b pushes the swinging portion 52b to the braking side so that the shaft portion 52a rotates toward one side in the rotation direction. Accordingly, the master cylinder 53 performs the same operation as when the brake pedal 23 is depressed. That is, when the swinging portion 52b is pushed to the piston rod 62b of the hydraulic cylinder 62, the piston and the push rod 53b of the master cylinder 53 are pushed into the cylinder 53a. Accordingly, the master cylinder 53 sends braking oil to the braking unit 51 through the braking oil line L1. Since the braking hydraulic pressure is applied to the braking unit 51, the braking unit 51 generates a braking force. When the supply of the hydraulic oil to the hydraulic cylinder 62 is stopped, the shaft portion 52a rotates toward the other side in the rotation direction. Accordingly, the swinging portion 52b pulls the push rod 53b of the master cylinder 53 so that the piston is returned by the return spring. Accordingly, the braking oil is returned from the braking unit 51 through the braking oil line L1. Accordingly, the braking hydraulic pressure applied to the braking unit 51 is released and the braking unit 51 releases the braking force.

The control device 35 controls the switching timing of the electromagnetic switching valve 61. The control device 35 controls the electromagnetic switching valve 61 so as to supply the hydraulic oil supplied from the PS pump 74 from the hydraulic oil line L6A to the hydraulic oil line L6B and supplies a part of the hydraulic pressure relating to the supply to the hydraulic oil line L8 so as to operate the hydraulic cylinder 62. Accordingly, a braking force is generated by the braking unit 51 (this braking force is referred to as the braking force due to the hydraulic pressure of the hydraulic circuit 70). The control device 35 supplies the hydraulic oil to the hydraulic cylinder 62 at a timing at which the driver does not depress the brake pedal 23 and a timing at which the braking force needs to be generated by the braking unit 51. For example, the control device 35 may generate a braking force by the hydraulic pressure of the hydraulic circuit 70 during an operation of connecting the connecting device 12 to the towing target T. Specifically, the control device 35 generates a braking force by the hydraulic pressure of the hydraulic circuit 70 after a predetermined time elapses or when the forward switch or the reverse switch is released at the time of connecting the towing target T to the connecting device 12 of the towing tractor 10. However, the timing at which the control device 35 generates a braking force by the hydraulic pressure of the hydraulic circuit 70 is not particularly limited and the towing tractor 10 may be stopped by generating a braking force by the hydraulic pressure of the hydraulic circuit 70, for example, when the emergency stop switch is pushed while the towing tractor 10 moves.

Additionally, in a normal state, the electromagnetic switching valve 61 enters a state in which the hydraulic oil circulates through the hydraulic oil lines L4, L5, L6A, and L6B. At this time, the electromagnetic switching valve 61 connects the hydraulic oil line L8 to the hydraulic oil line L7. Thus, when the generation of the braking force in the braking unit 51 is stopped, the hydraulic pressure inside the hydraulic cylinder 62 is released to the PS tank 73. The electromagnetic switching valve 61 supplies a part of the hydraulic pressure to the hydraulic oil line L8 while the hydraulic pressure is supplied to the PS valve 71 as described above by the signal from the control device 35.

Next, an operation and an effect of the brake system 100 according to the embodiment will be described.

The brake system 100 includes the braking unit 51 generating a braking force. This braking unit 51 is an existing mechanism which generates a braking force when the driver depresses the brake pedal 23. The brake system 100 includes the transmission unit 60 for such a braking unit 51. The transmission unit 60 generates a braking force in the braking unit 51 by transmitting the hydraulic pressure of the hydraulic circuit 70 performing a predetermined operation by the hydraulic pressure to the braking unit 51. Accordingly, the braking unit 51 can generate a braking force by using the hydraulic pressure of the existing hydraulic circuit 70. That is, since the brake system 100 automatically generates a braking force regardless of the operation of the brake pedal 23, a separate dedicated driving source such as a motor and a pump does not need to be provided. As described above, the brake system 100 can generate a braking force without using a dedicated driving source.

The brake system 100 further includes the operation unit 52 operating the braking unit 51 and the master cylinder 53 generating a braking hydraulic pressure for the braking unit 51 by the operation of the operation unit 52 and the transmission unit 60 operates the master cylinder 53 by the hydraulic pressure so as to transmit the braking hydraulic pressure to the braking unit 51 through the master cylinder 53. Accordingly, the transmission unit 60 can transmit a braking hydraulic pressure to the braking unit 51 through the master cylinder 53 even when the braking oil used in the braking unit 51 is different from the hydraulic oil used in the hydraulic circuit 70.

In the brake system 100, the transmission unit 60 transmits the hydraulic pressure of the hydraulic circuit 70 of the steering system 75 performing a steering operation of the towing tractor 10 to the braking unit 51. In this case, the transmission unit 60 can generate a braking force in the braking unit 51 by using the hydraulic pressure of the existing steering system 75 of the towing tractor 10.

The present invention is not limited to the above-described embodiment.

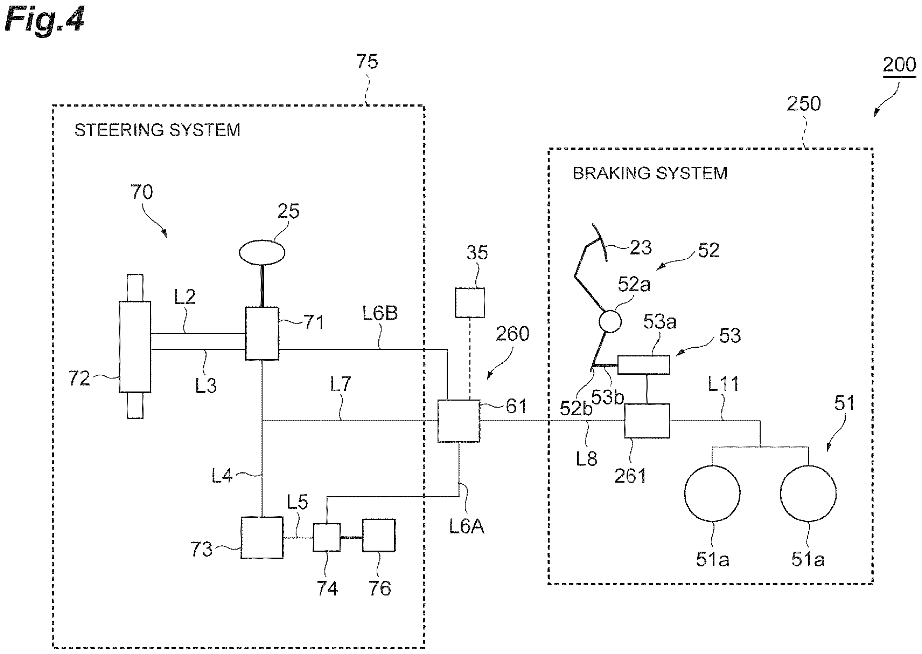

In the brake system 100 according to the above-described embodiment, different oils are used as the hydraulic oil of the hydraulic circuit 70 and the braking oil of the braking system 50. Instead, the same oil as the hydraulic oil of the hydraulic circuit 70 may be used in the braking system. In this case, a brake system 200 having the configuration illustrated in FIG. 4 (not in accordance with claim 1) may be adopted. A transmission unit 260 of the brake system 200 directly transmits the hydraulic pressure to the braking unit 51 by sending the hydraulic oil of the hydraulic circuit 70 to the braking unit 51 of a braking system 250. The hydraulic oil line L8 drawn out from the electromagnetic switching valve 61 is connected to an electromagnetic valve 261. The electromagnetic valve 261 is provided in a braking oil line L11 connecting the master cylinder 53 to the braking unit 51. The electromagnetic valve 261 opens the braking oil line L11 and closes the hydraulic oil line L8 at the time of generating a braking force by the operation of the brake pedal 23. Accordingly, the braking oil supplied from the master cylinder 53 is supplied to the braking unit 51. The electromagnetic valve 261 closes the side of the master cylinder 53 of the braking oil line L11 and opens the side of the hydraulic oil line L8 at the time of supplying the hydraulic oil from the transmission unit 260. Accordingly, the braking unit 51 generates a braking force by the hydraulic pressure of the hydraulic oil supplied from the hydraulic circuit 70. In this case, the transmission unit 260 can transmit the hydraulic pressure to the braking unit 51 without using a complex mechanism.

In the above-described embodiment and in the modified brake system 200 illustrated in FIG. 4, the brake system is adopted to the towing tractor 10 with the steering system 75. However, the type of the vehicle is not particularly limited and the brake system according to the present invention may be adopted as long as the vehicle includes the steering system with the hydraulic circuit. Further, the present invention is not limited to the vehicle with the steering system 75 as long as the vehicle includes the hydraulic circuit performing a predetermined operation by the hydraulic pressure and the brake system of the present invention may be adopted.

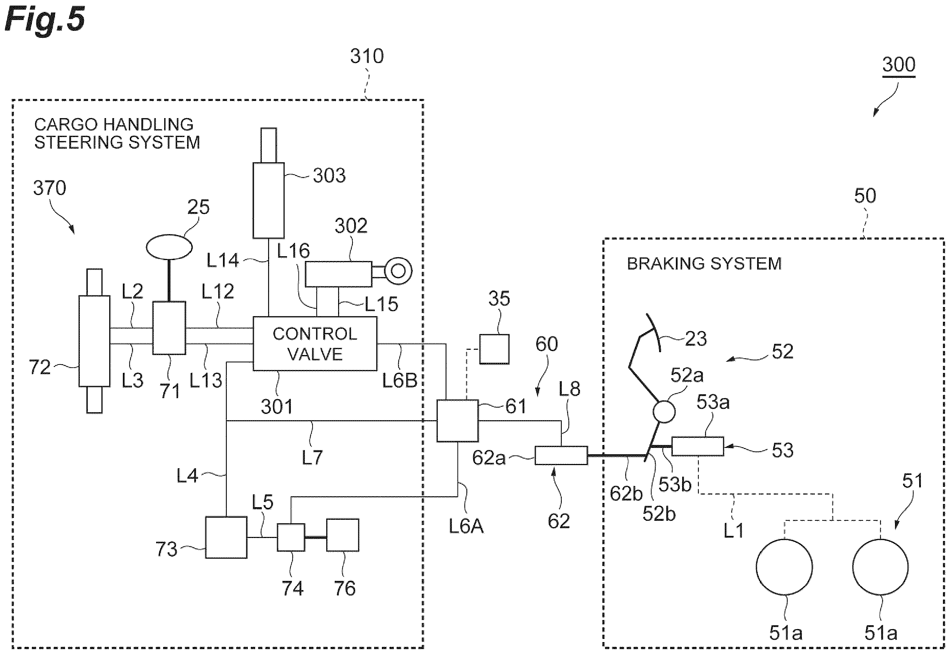

For example, a brake system 300 may be adopted to a forklift with a cargo handling steering system 310 (a cargo handling system) illustrated in FIG. 5. The cargo handling steering system 310 has a configuration in which a control valve 301, a tilt cylinder 302, and a lift cylinder 303 are added to the steering system 75 of the brake system 100 of FIG. 3. The cargo handling steering system 310 includes the control valve 301 on the hydraulic oil line L6B. The control valve 301 is a valve which supplies hydraulic oil to each hydraulic drive unit. The control valve 301 is connected to the PS valve 71 through hydraulic oil lines L12 and L13. Further, the control valve 301 is connected to the tilt cylinder 302 through hydraulic oil lines L15 and L16. The tilt cylinder 302 is a hydraulic cylinder for tilting a fork of a cargo handling portion. Further, the control valve 301 is connected to the lift cylinder 303 through a hydraulic oil line L14. The lift cylinder 303 is a hydraulic cylinder for moving the fork of the cargo handling portion up and down. Additionally, the brake system 300 includes the transmission unit 60 and the braking system having the same concept as the brake system 100.

In the brake system 300, the transmission unit 60 transmits the hydraulic pressure of a hydraulic circuit 370 of the cargo handling steering system 310 performing a cargo handling operation to the braking unit 51. In this case, the transmission unit 60 can generate a braking force in the braking unit 51 by using the hydraulic pressure of the existing cargo handling steering system 310 of the vehicle.

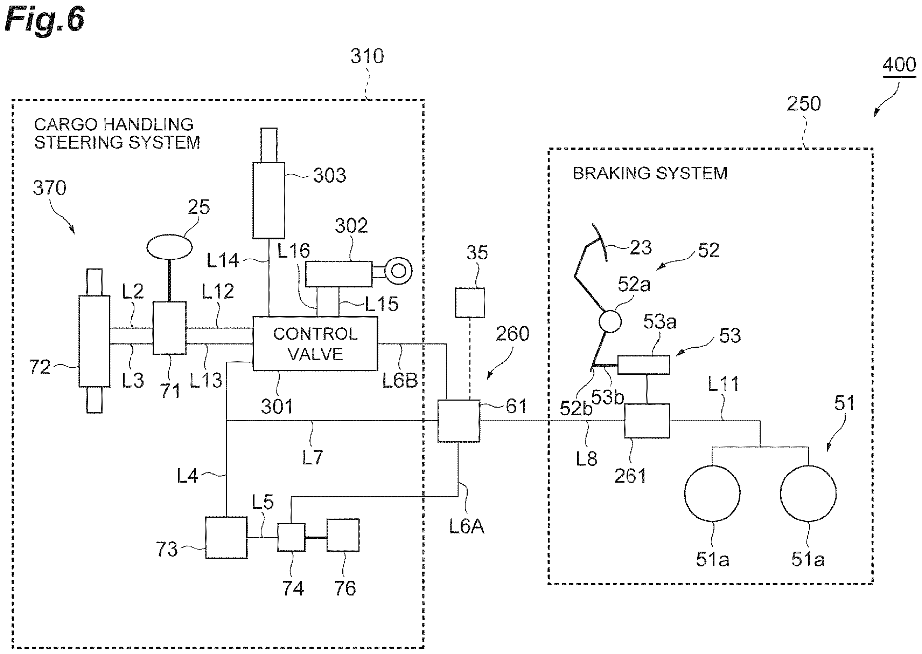

Further, a brake system 400 illustrated in FIG. 6 (not in accordance with claim 1) may be adopted. The brake system 400 illustrated in FIG. 6 has a configuration in which the transmission unit 260 and the braking system 250 illustrated in FIG. 4 are adopted to the brake system 300 of FIG. 5.

Additionally, the control valve 301 illustrated in FIGS. 5 and 6 may be integrated with the electromagnetic switching valve 61.

51: braking unit, 52: operation unit, 53: master cylinder, 60, 260: transmission unit, 70, 370: hydraulic circuit, 75: steering system, 310: cargo handling steering system (cargo handling system), 100, 200, 300, 400: brake system.

## Claims

1. A brake system (100, 300) for stopping an operation of a vehicle (10), the brake system (100, 300) comprising:
a braking system (50) including a braking unit (51) configured to generate a braking force, an operation unit (52) configured to operate the braking unit (51), and a master cylinder (53) configured to generate a braking hydraulic pressure for the braking unit (51) by the operation of the operation unit (52); and **characterized by**
a transmission unit (60) which includes a hydraulic cylinder (62) connected to the braking system (50),
wherein the transmission unit (60) is configured to generate the braking force in the braking unit (51) by transmitting a hydraulic pressure of a hydraulic circuit (70, 370) performing a predetermined operation by the hydraulic pressure to the braking unit (51),
wherein the hydraulic cylinder (62) of the transmission unit (60) is arranged to push a swinging portion (52b) of the operation unit (52) in a braking force generation direction by the hydraulic pressure of the hydraulic circuit (70, 370), thereby operating the master cylinder (53) to generate the braking hydraulic pressure for the braking unit (51).

2. The brake system (100, 300) according to claim 1, wherein the transmission unit (60) transmits the hydraulic pressure of the hydraulic circuit (70, 370) of a steering system (75) performing a steering operation of the vehicle (10) to the braking unit (51).

3. The brake system (100, 300) according to any one of claims 1 and 2, wherein the transmission unit (60) transmits the hydraulic pressure of the hydraulic circuit (70,370) of a cargo handling system (310) performing a cargo handling operation to the braking unit (51).

## Patentansprüche

1. Bremssystem (100, 300) zum Anhalten eines Betriebes eines Fahrzeugs (10), wobei das
Bremssystem (100, 300) Folgendes umfasst:
ein Bremssystem (50), das eine Bremseinheit (51), die zum Erzeugen einer Bremskraft konfiguriert ist, eine Betriebseinheit (52), die zum Betreiben der Bremseinheit (51) konfiguriert ist, und einen Hauptzylinder (53) einschließt, der zum Erzeugen eines hydraulischen Bremsdrucks für die Bremseinheit (51) durch den Betrieb der Betriebseinheit (52) konfiguriert ist; und **gekennzeichnet durch**
eine Übertragungseinheit (60), die einen Hydraulikzylinder (62) einschließt, der mit dem Bremssystem (50) verbunden ist,
wobei die Übertragungseinheit (60) konfiguriert ist, um die Bremskraft in der Bremseinheit (51) zu erzeugen, indem ein Hydraulikdruck einer Hydraulikschaltung (70, 370), die einen vorbestimmten Betrieb durch den Hydraulikdruck durchführt, auf die Bremseinheit (51) übertragen wird,
wobei der Hydraulikzylinder (62) der Übertragungseinheit (60) eingerichtet ist, um einen Schwingungsabschnitt (52b) der Betriebseinheit (52) durch den Hydraulikdruck der Hydraulikschaltung (70, 370) in eine Bremskrafterzeugungsrichtung zu drücken, wodurch der Hauptzylinder (53) betrieben wird, um den hydraulischen Bremsdruck für die Bremseinheit (51) zu erzeugen.

2. Bremssystem (100, 300) nach Anspruch 1, wobei die Übertragungseinheit (60) den Hydraulikdruck der Hydraulikschaltung (70, 370) eines Lenksystems (75), das einen Lenkvorgang des Fahrzeugs (10) durchführt, auf die Bremseinheit (51) überträgt.

3. Bremssystem (100, 300) nach einem der Ansprüche 1 und 2, wobei die Übertragungseinheit (60) den Hydraulikdruck der Hydraulikschaltung (70, 370) eines Frachthandhabungssystems (310), das einen Frachthandhabungsvorgang durchführt, auf die Bremseinheit (51) überträgt.

## Revendications

1. Système de frein (100, 300) destiné à stopper le fonctionnement d'un véhicule (10), le système de frein (100, 300) comprenant :
un système de freinage (50) incluant une unité de freinage (51) configurée pour générer une force de freinage, une unité fonctionnelle (52) configurée pour faire fonctionner l'unité de freinage (51), et un maître-cylindre (53) configuré pour générer une pression hydraulique de freinage destinée à l'unité de freinage (51) par le fonctionnement de l'unité fonctionnelle (52) ; et **caractérisé par**
une unité de transmission (60) qui inclut un vérin hydraulique (62) raccordé au système de freinage (50),
dans lequel l'unité de transmission (60) est configurée pour générer la force de freinage dans l'unité de freinage (51) par transmission d'une pression hydraulique d'un circuit hydraulique (70, 370) réalisant une opération prédéterminée par la pression hydraulique à l'unité de freinage (51),
dans lequel le vérin hydraulique (62) de l'unité de transmission (60) est agencé pour pousser une portion de balancement (52b) de l'unité fonctionnelle (52) dans une direction de génération de force de freinage par la pression hydraulique du circuit hydraulique (70, 370), permettant ainsi de faire fonctionner le maître-cylindre (53) pour générer la pression hydraulique de freinage de l'unité de freinage (51).

2. Système de frein (100, 300) selon la revendication 1, dans lequel l'unité de transmission (60) transmet la pression hydraulique du circuit hydraulique (70, 370) d'un système de direction (75) réalisant une opération de direction du véhicule (10) à l'unité de freinage (51).

3. Système de frein (100, 300) selon l'une quelconque des revendications 1 et 2, dans lequel l'unité de transmission (60) transmet la pression hydraulique du circuit hydraulique (70, 370) d'un système de manutention de cargaison (310) réalisant une opération de manutention de cargaison à l'unité de freinage (51).
